(19) Europäisches Patentamt
European Patent Office
Office européen des brevets

(11) **EP 1 894 907 A1**

(12) **EUROPEAN PATENT APPLICATION**
published in accordance with Art. 153(4) EPC

(43) Date of publication:
05.03.2008 Bulletin 2008/10

(51) Int Cl.:
*C04B 38/04* (2006.01)   *B28B 11/00* (2006.01)

(21) Application number: 06767266.7

(22) Date of filing: 23.06.2006

(86) International application number:
PCT/JP2006/312649

(87) International publication number:
WO 2006/137539 (28.12.2006 Gazette 2006/52)

(84) Designated Contracting States:
DE FR GB

(30) Priority: 24.06.2005 JP 2005184496
21.04.2006 JP 2006117845

(71) Applicant: Nippon Sheet Glass Company Limited
Minato-ku
Tokyo 1058552 (JP)

(72) Inventors:
• EMORI, Ikuko,
NIPPON SHEET GLASS COMPANY, LIMITED
Minato-ku, Tokyo 1058552 (JP)
• SATO, Noriaki,
NIPPON SHEET GLASS COMPANY, LIMITED
Minato-ku, Tokyo 1058552 (JP)

• KAWAZU, Mitsuhiro,
NIPPON SHEET GLASS COMPANY, LTD
Minato-ku, Tokyo 1058552 (JP)
• INOMOTO, Shunji,
NIPPON SHEET GLASS COMPANY, LTD.
Minato-ku,
Tokyo 1058552 (JP)
• TAKADA, Keigo,
NIPPON SHEET GLASS COMPANY, LTD.
Minato-ku, Tokyo 1058552 (JP)

(74) Representative: Gillet, Raphaëlle et al
Cabinet Beau de Loménie
158, rue de l'Université
75340 Paris Cedex 07 (FR)

(54) **METHOD FOR PRODUCING POROUS SILICA CERAMIC**

(57)  The present invention provides a method for producing a porous silica ceramic material, wherein the method includes a step of forming a mixture including silica particles, a binder and a plasticizer, a step of imparting porosity to a green obtained by the forming of the mixture, by extracting the plasticizer from the green, a step of impregnating the green to which the porosity has been imparted with a sintering aid, and a step of firing the green impregnated with the sintering aid.

A-1

A-2

A-3

FIG. 1

EP 1 894 907 A1

## EP 1 894 907 A1

**Description**

Technical Field

The present invention relates to a method for producing a porous silica ceramic material, and particularly to a method whereby a porous silica ceramic material having a network structure can be obtained.

Background Art

As methods for producing a porous ceramic material having a network structure, for example, a method disclosed in JP54(1979)-41613B (US 3,926,851) is mentioned. This method includes forming a composition consisting of a polyolefin, a ceramic filler and a plasticizer into a shaped body, extracting the plasticizer from the obtained shaped body, removing the polyolefin by heating the shaped body to obtain a porous ceramic structure, and firing the structure.

Further, in JP11(1999)-71188A, a method for producing a porous material is disclosed that includes mixing a ceramic powder, an inorganic binder and a super absorbent acrylic resin, extrusion-forming an obtained mixture to obtain a shaped body, and then firing the shaped body.

Furthermore, in JP2002-260961A, a separator for an electric double layer capacitor is disclosed that is obtained by extrusion-forming a raw material composition that is a mixture of a polyolefin-based resin, an inorganic powder, a plasticizer and a surfactant into a sheet-like shape and then removing the plasticizer from the shaped product.

It should be noted that, in this description, an unfired shaped body that includes silica particles is referred to as a green, according to the convention in the art. Further, a green which has been formed into a sheet-like shape is referred to as a green sheet.

As an application of the porous silica ceramic material, an adsorbent, a reaction catalyst, a culture support, a diaphragm, and a carrier of various labeling reagents are mentioned. In any of these applications, a uniform network structure often is required. In addition, an optimum pore size differs depending on the application.

Nevertheless, it is difficult to obtain a porous ceramic material having a uniform network structure or to control its pore size, by the methods described in the aforementioned references.

For example, with respect to a porous glass material, which is one of porous ceramic materials, a phase separation method is a mainstream of its production method. The pore size of this porous glass material is generally determined by a temperature and time of the heat treatment. However, the control of the pore size is only based on the following formula, which is determined empirically, and this does not reach a sufficient technical level.

$$(\text{Formula 1})$$
$$\ln(r) = A + B \cdot \ln(t) - C/T$$

r: pore radius of porous glass, T: phase separation temperature (K),
t: phase separation time, A, C: constants determined depending on glass composition, B: 1/2 in early stage of phase separation, 1/3 in general.

In addition, with respect to a porous glass material produced by a sol-gel method, it is considered that controlling a pore size is highly difficult. Further, in the production of a porous glass material wherein a glass powder whose particle size has been adjusted is sintered, it is difficult to obtain a porous glass having a uniform pore size.

Disclosure of Invention

Therefore, the present invention provides a method for producing a porous silica ceramic material which enables to obtain a porous silica ceramic material having a network structure and a uniform pore size easily even if a relatively low firing temperature is employed. The present invention also provides a method for producing a porous silica ceramic material that enables easy control of a pore size.

The present inventors have found that a porous silica ceramic material having a network structure and a uniform pore size can be obtained by impregnating a green with a sintering aid after a plasticizer is extracted from the green, and then by firing the green.

Namely, the present invention provides a method for producing a porous silica ceramic material, wherein the method includes

a step of forming a mixture including silica particles, a binder and a plasticizer,

a step of imparting porosity to a green obtained by the forming of the mixture, by extracting the plasticizer from the green,

a step of impregnating the green to which the porosity has been imparted with a sintering aid, and

a step of firing the green impregnated with the sintering aid.

According to the above-described method, a porous silica ceramic material having a network structure and a uniform pore size can be obtained by carrying out the step of impregnating the green with the sintering aid after the plasticizer is extracted from the green.

The method for producing a porous silica ceramic material according to the present invention enables to control the pore size easily merely by adjusting an impregnation amount of the sintering aid or by changing a firing condition (temperature, time) even if a green with the same composition is used.

Brief Description of Drawings

Fig. 1 shows SEM observation results of surfaces of a group of Examples A.

Fig. 2A shows SEM observation results of surfaces of a group of Examples B.

Fig. 2B shows SEM observation results of surfaces of a group of Examples B.

Fig. 3A shows SEM observation results of surfaces of a group of Examples C.

Fig. 3B shows SEM observation results of surfaces of a group of Examples C.

Fig. 4A shows SEM observation results of surfaces of a group of Examples D.

Fig. 4B shows SEM observation results of surfaces of a group of Examples D.

Fig. 5 shows an SEM observation result of a surface of Example E.

Fig. 6 shows an SEM observation result of a surface of Comparative Example 1.

Fig. 7 shows an SEM observation result of a surface of a green sheet, from which a plasticizer has been extracted.

Best Mode for Carrying Out the Invention

The method of producing a porous silica ceramic material according to the present invention is explained ore in detail.

As the binder to be with the silica particles, a combustible resin powder that is removable by firing is suitable. A kind of the resins is not particularly limited and, for example, polyolefin-based thermoplastic resins such as polyethylene and polypropylene can be used. As the plasticizer to be mixed with the silica particles along with the binder, one that can be extracted by an organic solvent easily and can impart porosity to green is desirable. For example, a mineral oil (industrial lubricant such as paraffin-based lubricant or naphthene-based lubricant) is preferably used. The step of extracting the plasticizer using an organic solvent includes, for example, an operation of immersing a green into the organic solvent. The organic solvent that can be used in the operation is, for example, trichloroethylene, methylene chloride, trichloroethane, and n-bromopropane as a halide, n-hexane, n-decane, tetralin, kerosene, and methyl ethyl ketone as a hydrocarbon based material.

As the sintering aid used in the present invention, at least one selected from the group consisting of a compound containing an alkali metal, a compound containing an alkaline earth metal, a compound containing boron, and a compound containing phosphorus can be used. Particularly, the group of the above-mentioned compounds is preferable since the compounds have a function of decreasing the melting point of the silica particles. Further, two or more kinds of the compounds containing a alkali metal may be used in combination, for example, a compound containing Na and a compound containing K are used in combination. Regarding this, the same applies to the compound containing an alkaline earth metal, the compound containing boron, and the compound containing phosphorus.

First, the compound containing an alkali metal acts as a network modifying oxide for a network structure of silica and serves to decrease the viscosity of the silica and facilitate melting. As the alkali metal, Na, K, and Li can be mentioned. As these compounds, water-soluble compounds such as chloride, hydroxide, acetate salt, sulfate salt, carbonate salt, nitrate salt, and phosphate salt are preferable. As specific examples thereof, sodium chloride, sodium hydroxide, sodium acetate, sodium sulfate, sodium carbonate, sodium hydrogencarbonate, sodium nitrate, potassium chloride, potassium hydroxide, potassium acetate, potassium sulfate, potassium carbonate, potassium nitrate, lithium chloride, lithium hydroxide, lithium acetate, lithium sulfate, lithium carbonate, lithium nitrate, sodium phosphate, potassium phosphate, and lithium phosphate are mentioned.

In addition, as the compound containing an alkali metal, a silicate salt such as sodium silicate (water glass) is preferable since the silicate salt shows a good solubility in water and is easy to handle.

Next, the compound containing an alkaline earth metal acts as a network modifying oxide for a network structure of silica and serves to decrease the high temperature viscosity of the silica and facilitate melting. As the alkaline earth metal, Mg, Ca, Sr, and Ba can be mentioned. As these compounds, water-soluble compounds such as chloride, hydroxide, acetate salt, sulfate salt, carbonate salt, and nitrate salt are preferable. As specific examples thereof, magnesium chloride, magnesium hydroxide, magnesium acetate, magnesium sulfate, magnesium carbonate, magnesium nitrate, calcium chlorite, calcium hydroxide, calcium acetate, calcium sulfate, calcium carbonate (limestone), calcium nitrate, strontium chloride, strontium hydroxide, strontium acetate, strontium sulfate, strontium carbonate, strontium nitrate, barium chloride, barium hydroxide, barium acetate, barium sulfate, barium carbonate, barium nitrate, magnesium phosphate, calcium phosphate, strontium phosphate, and barium phosphate are mentioned.

Further, in the silicate glass, the compound containing boron serves to decrease the viscosity of the glass and facilitate melting. Boric acid and borax are specifically exemplified.

As the compound containing phosphorus, phosphoric acid and a phosphoric acid salt are exemplified. Specifically, sodium phosphate, potassium phosphate, lithium phosphate, magnesium phosphate, calcium phosphate, strontium phosphate, barium phosphate, phosphoric acid (orthophosphoric acid), ammonium phosphate and the like are exemplified.

The step of forming the mixture of the above-described materials may be determined depending on an application of the porous silica ceramic material to be obtained. For example, known forming methods such as an extrusion-forming method, an injection-forming method, a printing method, and a doctor blade method can be employed.

The step of impregnating the sintering aid into the green from which the plasticizer has been extracted can be carried out by bringing the green into contact with a liquid containing the sintering aid. Specifically, a method of immersing the green into the liquid containing the sintering aid, a method of spraying the liquid containing the sintering aid to the green, and a method of applying the liquid containing the sintering aid to the green can be employed. It is desirable that the liquid containing the sintering aid is a solution of the sintering aid.

According to the production method of the present invention, it is possible to produce a porous silica ceramic material having a network structure and a uniform pore size. It is possible to control the thickness of the network skeleton and the pore size by a condition concerning the sintering aid with which the green is to be impregnated and/or a condition of firing the green. The condition concerning the sintering aid specifically means a composition of the sintering aid, and an amount (mass) of the sintering aid to be attached per unit volume of the green. The amount of the sintering aid to be attached per unit volume of the green can be controlled, for example, by changing a concentration of the solution containing the sintering aid. The condition of firing specifically means a temperature of firing the green, and time of firing the green. It is possible to control the thickness of the network skeleton and the pore size, that is to say the specific surface area of the porous silica ceramic material, by changing (adjusting) these conditions. In some cases, it is possible to control the thickness of the network skeleton and the pore size by changing a firing atmosphere (oxidizing, reducing, or inert).

Voids are present in the green from which the plasticizer has been extracted. The sintering aid is impregnated in these voids. When this green is fired, the silica particles contact with the sintering aid in the firing process and the sintering aid acts as a flux of the silica particles. Therefore, the firing temperature in the firing step may be lower than the temperature at which the silica particles generally are sintered. In particular, it is possible to sinter at or below the temperature of 1000°C, in some cases at about 700°C.

In addition, it is recommended to impart a hydrophilic property to the green by making the green contain a hydrophilicity-imparting agent such as alkylsulfosuccinic acid salt when the silica particles, the binder and the plasticizer are mixed and formed. This serves to facilitate immersing of the sintering aid. As specific examples, an anionic hydrophilicity-imparting agent such as a naphthalene sulfonate formaldehyde condensate, and a nonionic hydrophilicity imparting agent such as polyoxyethylene alkyl ether as well as an alkylsulfosuccinic acid salt can be used alone or as a mixture thereof.

Further, in order to obtain a similar effect, coating the above-mentioned alkylsulfosuccinic acid salt and the like on the surface of green from which the plasticizer has been extracted may be performed.

Furthermore, in the method for producing a porous silica ceramic material according to the present invention, a distribution of the pore size can be formed merely by altering the amount of the sintering aid impregnated from part to part in the green. This distribution of the pore size may be stepwise or vary progressively.

As the method of altering the amount of the sintering aid impregnated, a method of impregnating each part of the green with a water glass having a different diluting ratio is exemplified. In specific, the one part of the green that is a shaped body is contacted with a solution having a low concentration of the sintering aid so that the amount of the sintering aid impregnated is small. In contrast, the other part of the green is contacted with a solution having a high concentration of the sintering aid so that the amount of the sintering aid impregnated is large. Consequently, regions in which the thicknesses of the network skeleton and pore sizes differ can be formed in one green.

It should be noted that the green used in the production method according to the present invention has a plasticity and is easy to be processed into various shapes such as a sheet-like shape, a fiber-like shape, and a bead-like shape. For example, when the green is formed into a sheet-like shape, the green can be shaped freely by folding the green or piling the greens in a similar manner for ceramic papers used in the ceramic art or the like. The green also can be processed into an embossed sheet and a three-dimensionally formed sheet as well as a sheet having a wave pattern, by pressing the green sheet.

Examples

[Production of green sheets]

First, green sheets to be used in the following Examples were produced as follows. A silica powder with a specific surface area of 200 $m^2$/g was prepared as the silica particles. A powder of a high-density polyethylene resin having average molecular weight of 2,000,000 was prepared as the A oil was prepared as the plasticizer.

70 parts by mass of the silica powder, 30 parts by mass of the high-density polyethylene resin powder, 100 parts by mass of the mineral oil, and 5 parts by mass of an alkylsulfosuccinic acid salt were mixed using an extruder. The mixture extruded from the extruder was pressure-formed using forming rolls so that a green sheet with a thickness of 100 $\mu$m was obtained.

Next, the plasticizer (mineral oil) in the green sheet was removed by extracting with an organic solvent and the green sheet was heated and dried so that the green sheet with the thickness of 100 $\mu$m from which the plasticizer had been extracted was prepared. In this green sheet, voids were formed at the place where the extracted plasticizer had been present. In the following Example, this green sheet was used.

(Examples A-1 to A-3)

First, with respect to a group of Examples A, water glasses, which are sodium silicate ($Na_2O$-$nSiO_2$), were used as the sintering aid. As the water glass, No. 1, No. 2 and No. 3, which are prescribed in Japanese Industrial Standards (JIS K 1408), were used, and each of them was diluted 50-fold with water. The prepared green sheet was impregnated with the diluted water glass. The difference among No. 1, No. 2 and No. 3 was in the molar ratio of $Na_2O$ and $SiO_2$, and the ratio of $SiO_2$ became greater in the order of No.1<No. 2<No. 3.

The impregnation of the green sheet with the liquid containing the water glass was carried out by dropping the liquid evenly on the surface of the green sheet. The excess liquid on the surface was removed, and the green sheet was dried at the drying temperature of 50°C. Then, the green sheet was fired at 900°C for 1 hour so that the porous silica ceramic material was obtained. The conditions of firing and the like are shown in Table 1.

Table 1

| Example | Sintering aid | Firing temperature (°C) | Firing time (hr) | Presence of skeleton |
|---------|---------------|------------------------|------------------|---------------------|
| A-1 | No. 1 water glass | 900 | 1.0 | Present |
| A-2 | No. 2 water glass | 900 | 1.0 | Present |
| A-3 | No.3 water glass | 900 | 1.0 | Present |

The surfaces of the porous silica ceramic materials obtained were observed appropriately with the following two kinds of scanning electron microscopes (SEM). The presence or absence of the skeleton was judged from the results of the SEM observations.

- Scanning electron microscope, manufactured by JEOL Ltd. Model: JSM-T330A
  Photographic condition: accelerating voltage, 15kV; photographing magnification, 50000x
- Scanning electron microscope, manufactured by KEYENCE CORPORATION
  Model: VE-7800
  Photographic condition: accelerating voltage, 5kV; photographing magnification, 5000x

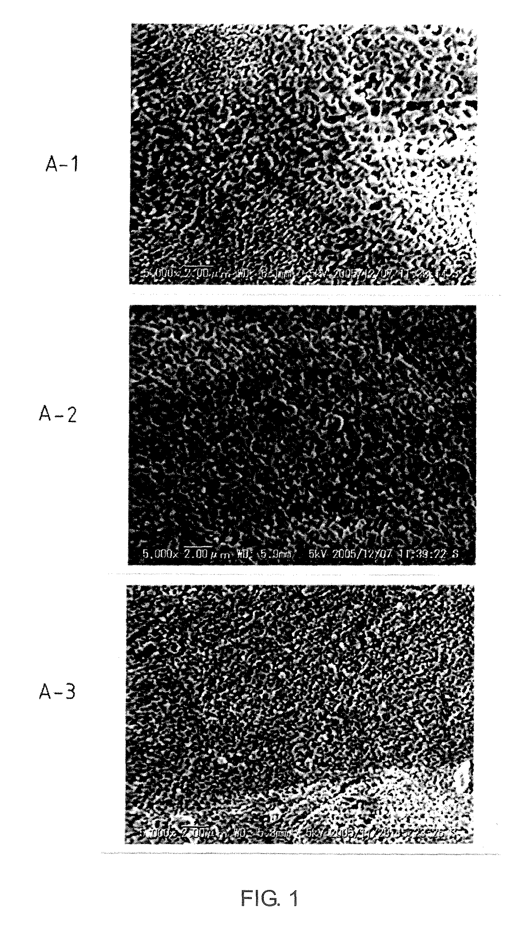

The SEM observation results of the porous silica ceramic materials of the group of Examples A are shown in Fig. 1. The presence of the skeleton was confirmed from the observation results in each case. In addition, the tendency for the skeleton thickness to differ depending on the water glass used was observed. To be more precise, it has found that the skeleton becomes thin when the JIS No. 3 water glass, which contains Na in a small amount, is used, and that the skeleton becomes thick when the JIS No. 1 water glass, which contains Na in a large amount, is used. It should be noted that the content of the Na in the water glass becomes larger in the order of JIS No. 3<JIS No. 2<JIS No. 1.

(Examples B-1 to B-5)

Next, with respect to the group of Examples B, the JIS No. 3 water glass was used as the sintering aid and its dilution ratio was changed from 10-fold to 100-fold. The firing temperature was set to be 900°C and the firing time was set to be 1.5 hours. The conditions of firing and the like are shown in Table 2.

Table 2

| Example | Dilution ratio | Firing temperature (°C) | Firing time (hr) | Presence of skeleton |
|---|---|---|---|---|
| B-1 | 10-fold | 900 | 1.5 | Present |
| B-2 | 30-fold | 900 | 1.5 | Present |
| B-3 | 50-fold | 900 | 1.5 | Present |
| B-4 | 75-fold | 900 | 1.5 | Present |
| B-5 | 100-fold | 900 | 1.5 | Present |

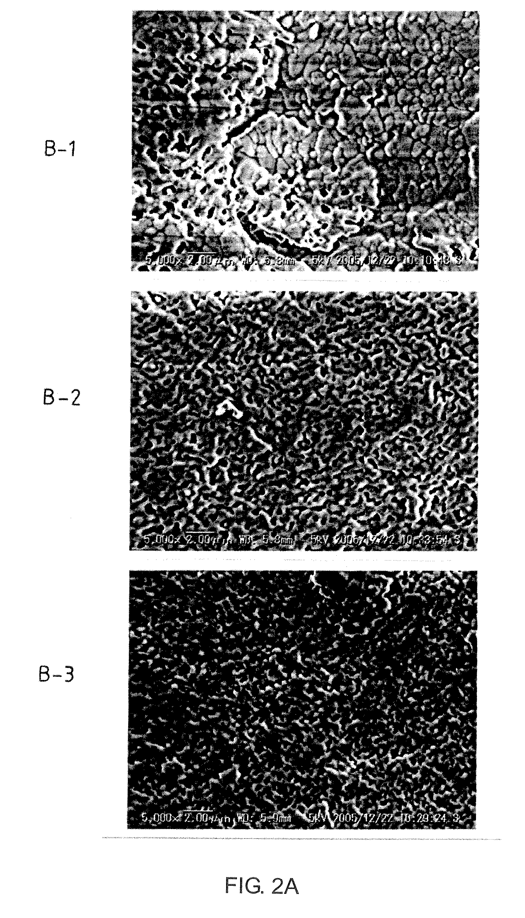

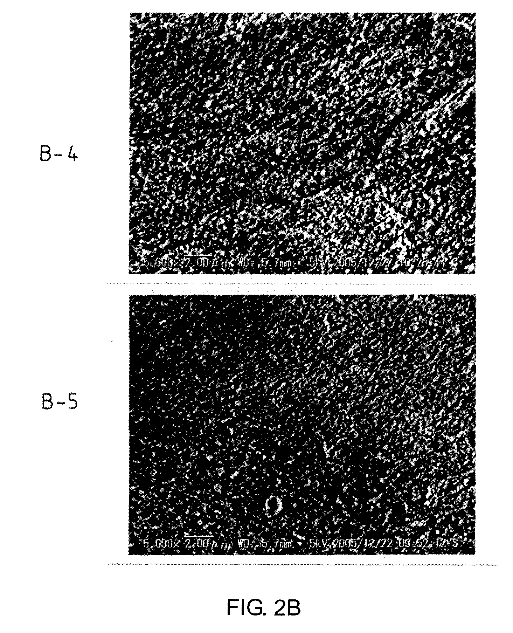

The SEM observation results of the porous silica ceramic materials of the group of Examples B are shown in Fig. 2A and Fig. 2B. The presence of the skeleton was confirmed from the observation results in each case. In the case where the dilution ratio is small, that is to say the content of the water glass is large (dilution ratio: 10-fold), the sintering proceeded excessively and a part of the voids was collapsed. It has found that the skeleton of the porous silica ceramic material becomes thinner as the dilution ratio becomes larger, that is to say the content of the water glass becomes smaller.

(Examples C-1 to C-5)

Next, with respect to the group of Examples C, JIS No. 3 water glass was used as the sintering aid. Its dilution ratio was fixed to 50-fold and the firing temperature was fixed to 900°C. The firing time was changed from 2 min to 30 min. The conditions of firing and the like are shown in Table 3.

Table 3

| Example | Dilution ratio | Firing temperature (°C) | Firing time (hr) | Presence of skeleton |
|---|---|---|---|---|
| C-1 | 50-fold | 900 | 2 | Present* |
| C-2 | 50-fold | 900 | 5 | Present* |
| C-3 | 50-fold | 900 | 10 | Present* |
| C-4 | 50-fold | 900 | 15 | Present* |
| C-5 | 50-fold | 900 | 30 | Present |

*: judged from observation result at photographing magnification of 50000x.

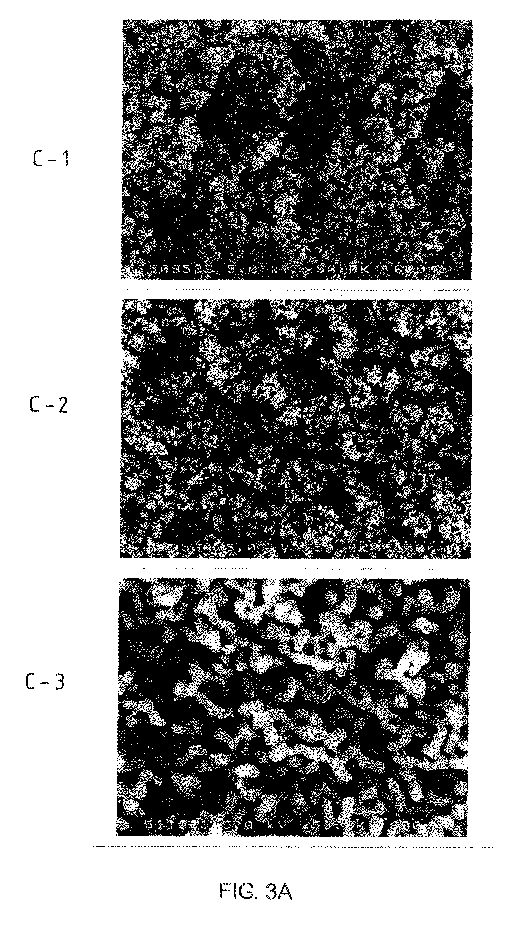

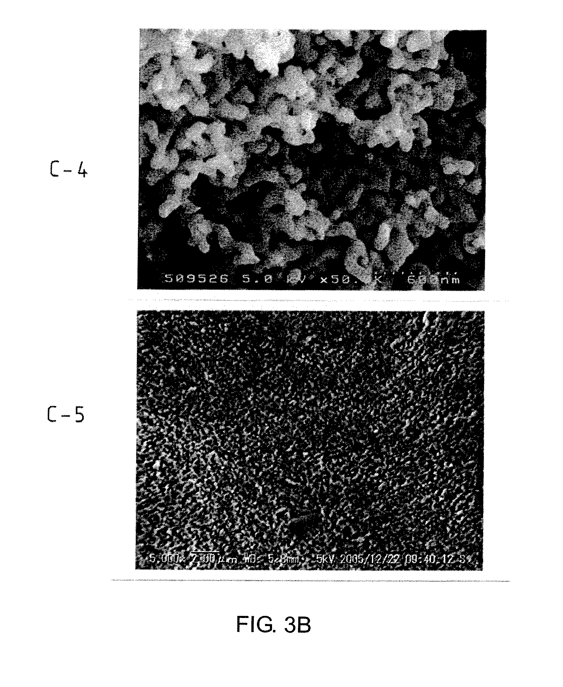

The SEM observation results of the porous silica ceramic materials of the group of Examples C are shown in Fig. 3A and Fig. 3B. In the cases where the sintering times were 2 min to 15 min (C-1 to C-4), the presence of the skeleton was confirmed from the result of the observation at the photographing magnification of 50000x. In addition, the pore having a structure of a continuous hole from the one surface of the porous silica ceramic sheet to the other also was confirmed. In the case where the firing time was 30 min (C-5), the presence of the skeleton was confirmed from the result of the observation at the photographing magnification of 5000x. It has found that the longer the firing time is, the thicker the skeleton becomes. It should be noted that the presence or absence of the continuous hole was judged from the result of the test in which water is dropped onto the one surface of the porous silica ceramic sheet and then leaching of the water from the other surface is checked, and from the result of the SEM observation.

(Examples D-1 to D-5)

With respect to the group of Examples D, a sintering aid other than a water glass was used. Regarding boric acid, a 5 mass% aqueous solution was used. Regarding NaCl, a 5 mass% aqueous solution was used. Regarding NaOH, a 0.01N aqueous solution was used. Regarding KCl, a 3.7 mass% aqueous solution was used. Regarding $CaCl_2$, a 5.6

mass% aqueous solution was used. The conditions of firing are as shown in Table 4.

Table 4

| Example | Sintering aid | Firing temperature (°C) | Firing time (hr) | Presence of skeleton |
|---------|---------------|-------------------------|------------------|----------------------|
| D-1 | Boric acid | 700 | 1.0 | Present |
| D-2 | NaCl | 700 | 1.0 | Present |
| D-3 | NaOH | 900 | 1.0 | Present |
| D-4 | KCl | 850 | 1.0 | Present |
| D-5 | CaClz | 850 | 1.0 | Present |

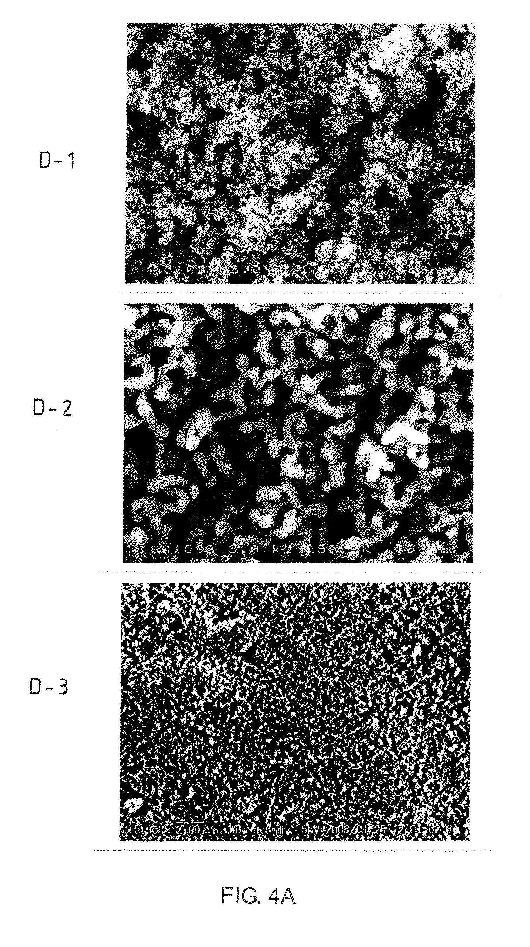

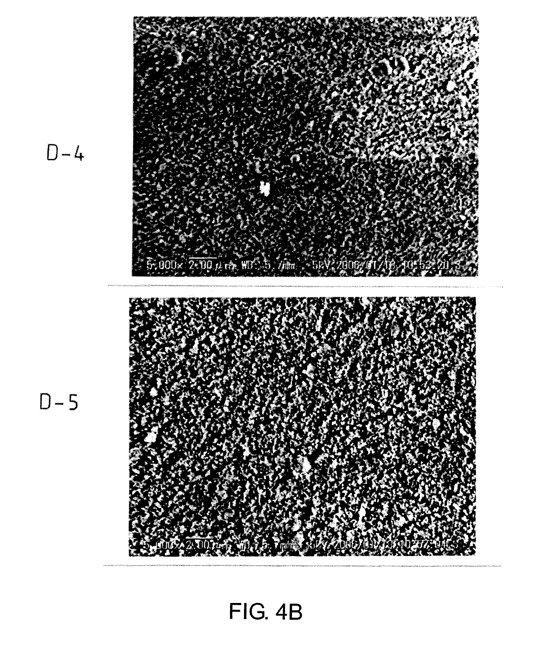

The SEM observation results of the porous silica ceramic materials of the group of Examples D are shown in Fig. 4A and Fig. 4B. The presence of the skeleton was confirmed from the observation result in each case where boric acid, NaCl, NaOH, KCl, or $CaCl_2$ was used as the sintering aid. It should be noted that the presence of the skeleton was confirmed from the observation results at the photographing magnification of 50000x for boric acid and NaCl, and the observation results at the photographing magnification of 5000x for NaOH, KCl, and $CaCl_2$. It was also confirmed that the skeleton thickness differs depending on the kinds of the sintering aid.

Hence, with respect to the sintering aid used in the present invention, as long as a compound contains a component that can be a network modifying oxide in the glass or a component which has a lower function of forming a network than that of the silica particles, such as boron for silicon, and as long as the compound is soluble in a solvent, such as water or an alcohol, at a room temperature so as to give a solution to be used for the impregnation of the green sheet, any form of the compound can be used. It should be noted that the component that can be a network modifying oxide means a component that can convert into a network forming oxide in the sintering process.

(Example E)

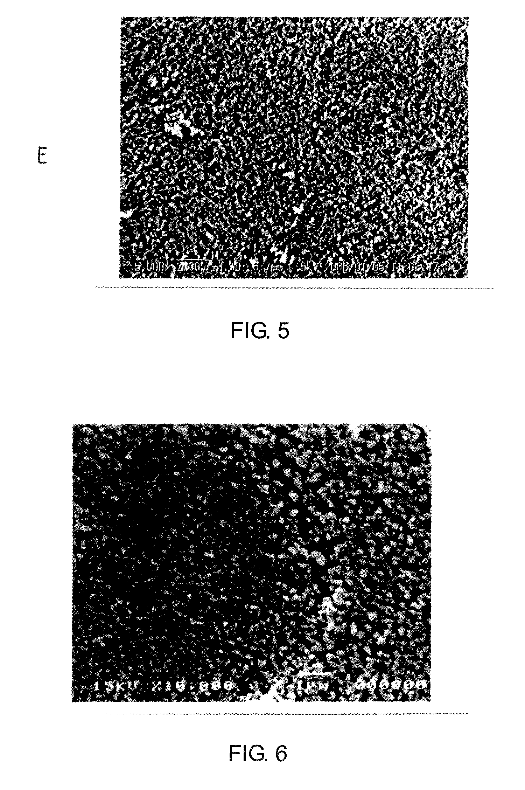

Example E is an example in which the mixture of a water glass and boric acid was used. A solution containing a sintering aid was prepared by diluting No. 3 water glass 2-fold with water and adding boric acid at the concentration of 2.5 mass%. The firing temperature was set to be 650°C and the firing time was set to be 1.5 hours. From the result of the SEM observation of the porous silica ceramic material obtained (see Fig. 5), the presence of the skeleton was confirmed.

(Comparative Example 1)

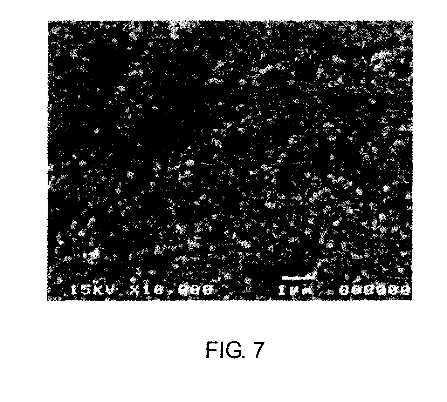

In Comparative Example 1, the same green sheet as that used in the above-described examples was used without being impregnated with the diluted liquid of the water glass. The green sheet was fired at 900°C for 1.5 hours so that the porous silica ceramic material was obtained. The observation result of its surface is shown in Fig. 6. The photographic condition was similar to that of Example 1. The observation result of the green sheet is shown in Fig. 7 for comparison. The photographic condition was similar to that of Example 1.

(Surface state of porous silica ceramic material of Comparative Example)

First, with respect to the green sheet (Fig. 7), it is observed that the resin was integrated with the silica particles being combined, and the pores of around 200 nm were thus formed.

Next, with respect to Comparative Example 1 (Fig. 6), since the green sheet was only fired without a sintering aid, the silica particles were aggregated on the whole, but in some parts, the silica particle is not present. It is considered that the parts where the silica particle is not present are derived from the pores of around 200 nm that were originally present in the green sheet. Therefore, it is considered that the state of pores in the green sheet determines the state of pores in the porous silica ceramic material after firing. Hence, it is considered that the final state of pores in the porous silica ceramic material is determined by the state of the green, especially the mixing ratio of the plasticizer.

On the other hand, with respect to the present invention (the group of Examples A to Example E) in which the porous green sheet as impregnated with the sintering aid, the silica particles bonded to each other, and the network skeleton was formed in each examples.

When the results of the groups of Examples B and C were considered collectively, it has found that the skeleton thickness changes as the firing condition, temperature and time, changes. Further, from the results of the group of Examples A, it is recognized that the skeleton thickness changes also depending on the content of the sintering aid. Therefore, even if the same green sheet is used, porous silica ceramic materials having various skeleton configurations can be obtained merely by changing the condition concerning the sintering aid (composition of the solution) or the firing condition. Consequently, according to the production method of the present invention, it is possible to control the pore size of the porous silica ceramic material.

In addition, as long as a compound can be a network modifying oxide in the glass and can be dissolved in a solvent, such as water or an alcohol, at a room temperature for the impregnation of the green sheet, the compound can be used as the sintering aid. Further, a plurality of sintering aids can be used in combination.

As explained above, the porous silica ceramic material according to the present invention is a porous material having a network skeleton and even a continuous hole, and therefore a gas or a liquid is easy to spread in every pore. Hence, the porous silica ceramic material can be used as, for example, an adsorbent, a reaction catalyst, a culture support, a diaphragm, and a carrier for various labeling reagents.

**Claims**

1. A method for producing porous silica ceramic material, wherein the method comprises:

   a step of forming a mixture including silica particles, a binder and a plasticizer,
   a step of imparting porosity to a green obtained by the forming of the mixture, by extracting the plasticizer from the green,
   a step of impregnating the green to which the porosity has been imparted with a sintering aid, and
   a step of firing the green impregnated with the sintering aid.

2. The method for producing a porous silica ceramic material according to claim 1, wherein the step of impregnating the green with the sintering aid is carried out by bringing a liquid containing the sintering aid into contact with the green.

3. The method for producing a porous silica ceramic material according to claim 1, wherein the sintering aid is at least one selected from the group consisting of a compound containing an alkali metal, a compound containing an alkaline earth metal, a compound containing boron, and a compound containing phosphorus.

4. The method for producing a porous silica ceramic material according to claim 3, wherein the compound containing an alkali metal is a water glass.

5. The method for producing a porous silica ceramic material according to claim 3, wherein the compound containing an alkali metal is at least one selected from the group consisting of chloride, hydroxide, carbonate salt, acetate salt, sulfate salt, nitrate salt, and phosphate salt.

6. The method for producing a porous silica ceramic material according to claim 3, wherein the compound containing an alkaline earth metal is at least one selected from the group consisting of chloride, hydroxide, carbonate salt, acetate salt, sulfate salt, nitrate salt, and phosphate salt.

7. The method for producing a porous silica ceramic material according to claim 3, wherein the compound containing boron is boric acid or borax.

8. The method for producing a porous silica ceramic material according to claim 3, wherein the compound containing phosphorus is phosphoric acid or a phosphoric acid salt.

9. The method for producing a porous silica ceramic material according to claim 1, wherein the green impregnated with the sintering aid is fired at or below the temperature of 1000°C.

A-1

A-2

A-3

FIG. 1

B-1

B-2

B-3

FIG. 2A

B-4

B-5

FIG. 2B

C-1

C-2

C-3

FIG. 3A

C-4

C-5

FIG. 3B

D-1

D-2

D-3

FIG. 4A

D-4

D-5

FIG. 4B

E

FIG. 5

FIG. 6

FIG. 7

<div align="center">

**INTERNATIONAL SEARCH REPORT**

</div>

| | International application No. |
|---|---|
| | PCT/JP2006/312649 |

**A. CLASSIFICATION OF SUBJECT MATTER**
*C04B38/04*(2006.01)i, *B28B11/00*(2006.01)i

According to International Patent Classification (IPC) or to both national classification and IPC

**B. FIELDS SEARCHED**

Minimum documentation searched (classification system followed by classification symbols)
C04B35/14, 38/00, 38/04, B28B11/00, 11/04

Documentation searched other than minimum documentation to the extent that such documents are included in the fields searched
Jitsuyo Shinan Koho          1922-1996    Jitsuyo Shinan Toroku Koho    1996-2006
Kokai Jitsuyo Shinan Koho    1971-2006    Toroku Jitsuyo Shinan Koho    1994-2006

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 63-297259 A  (W.R. Grace & Co.), 05 December, 1988 (05.12.88), Full text & US 4900698 A        & AU 1635688 A1 | 1-9 |
| A | JP 7-265625 A  (Kurosaki Corp.), 17 October, 1995 (17.10.95), Abstract; example 2 (Family: none) | 1-9 |

☐ Further documents are listed in the continuation of Box C.      ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered   to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 08 September, 2006 (08.09.06) | 19 September, 2006 (19.09.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 54041613 B
- US 3926851 A
- JP 11071188 A
- JP 2002260961 A